# FASCICULE DE BREVET EUROPEEN

(11) **EP 4 598 407 B1**
(45) Date de publication et mention de la délivrance du brevet: **12.08.2026**
(21) Numéro de dépôt: 23794087.9
(22) Date de dépôt: 04.10.2023
(51) Int. Cl.: A47J 31/44

(54) **MACHINE DE DISTRIBUTION DE BOISSONS POURVUE D'UN DISPOSITIF DE MOUSSAGE DE LAIT DÉPLAÇABLE VERTICALEMENT**
GETRÄNKEAUSGABEMASCHINE MIT VERTIKAL VERSCHIEBBARER MILCHAUFSCHÄUMVORRICHTUNG
BEVERAGE DISPENSING MACHINE WITH VERTICALLY DISPLACEABLE MILK FROTHING DEVICE

(30) Priorité: 07.10.2022 FR 2210284
(43) Date de publication de la demande: 13.08.2025
(73) Titulaire: SEB S.A., 69130 Ecully (FR)
(72) Inventeur: MORIN, Gilles, 69134 ECULLY CEDEX (FR)
(74) Mandataire: SEB Développement
(86) Numéro de dépôt international: PCT/FR2023/051539
(87) Numéro de publication internationale: WO 2024/074789

(56) Documents cités:
- EP-A1- 2 407 068
- US-A1- 2010 128 557
- US-A1- 2016 345 773
- US-B1- 6 293 187

## Description

### Domaine technique

La présente invention concerne le domaine des machines de distribution de boissons équipées de dispositifs de moussage de lait.

### Etat de la technique

Une machine de distribution de boissons, telle qu'une machine à café automatique, comporte de façon connue un bâti, un support de tasse, une chaudière disposée dans le bâti et configurée pour produire de l'eau chaude et/ou de la vapeur, une tête de distribution configurée pour alimenter en boisson, et par exemple en café ou en eau chaude, une tasse disposée sur le support de tasse, et un dispositif de moussage de lait comprenant notamment une partie de raccordement configurée pour être raccordée fluidiquement à un organe de raccordement qui est prévu sur le bâti et qui est configuré pour être alimenté en eau chaude et/ou en vapeur d'eau provenant de la chaudière.

La tête de distribution d'une telle machine de distribution de boissons est généralement réglable en hauteur et est plus particulièrement déplaçable verticalement par rapport au bâti entre une position basse et une position haute, et ce afin de pouvoir ajuster la position de la tête de distribution en fonction de la taille de la tasse utilisée.

Cependant, le dispositif de moussage de lait d'une telle machine de distribution de boissons étant statique, le versage de mousse de lait dans une tasse disposée en dessous du dispositif de moussage de lait s'avère peu précis, ce qui est susceptible d'induire une salissure importante de la tasse et de la machine de distribution de boissons. De plus, en particulier lorsque l'utilisateur utilise une tasse de petite taille, le versage de la mousse de lait dans ladite tasse est susceptible d'induire d'une part des risques d'éclaboussure importants et d'autre part la formation de grosses bulles à la surface de la mousse de lait contenue dans la tasse, et ce en raison de la hauteur de chute importante du lait chaud moussé avant d'atteindre la tasse.

Une machine de distribution de boissons présentant les caractéristiques techniques du préambule de la revendication 1 est divulguée dans le document EP2407068A1.

### Résumé de l'invention

La présente invention vise à remédier à tout ou partie de ces inconvénients.

Le problème technique à la base de l'invention consiste notamment à fournir une machine de distribution de boissons dont le dispositif de moussage de lait garantit l'obtention d'une mousse de lait ayant une consistance appropriée et limite sensiblement les risques de salissure de la machine de distribution de boissons.

A cet effet, la présente invention concerne une machine de distribution de boissons, telle qu'une machine à café automatique, comportant :
- un bâti,
- une chaudière disposée dans le bâti et configurée pour produire de l'eau chaude et/ou de la vapeur,
- une tête de distribution qui est réglable en hauteur et est déplaçable verticalement par rapport au bâti entre une position basse et une position haute,
- un organe de raccordement qui est configuré pour être relié fluidiquement à la chaudière et pour être alimenté en eau chaude et/ou en vapeur d'eau provenant de la chaudière, et
- un dispositif de moussage de lait comportant un réservoir de lait délimitant un volume interne destiné à contenir du lait, et une partie de raccordement configurée pour être raccordée mécaniquement et fluidiquement à l'organe de raccordement et pour alimenter le dispositif de moussage de lait en eau chaude et/ou en vapeur d'eau.

L'organe de raccordement est déplaçable verticalement par rapport au bâti, et le dispositif de moussage de lait est réglable en hauteur et est déplaçable verticalement par rapport au bâti entre une position abaissée et une position surélevée.

Une telle configuration de la machine de distribution de boissons permet d'ajuster la position d'un conduit de déversement de mousse de lait, prévu sur le dispositif de moussage de lait, en fonction de la taille de la tasse utilisée, et plus particulièrement de déplacer le conduit de déversement de mousse de lait au plus près de la tasse. Ces dispositions permettent un versage plus précis de la mousse de lait chaud dans la tasse, et limitent donc sensiblement les risques de salissure de la machine de distribution de boisons et de la tasse lorsque l'utilisateur utilise notamment une tasse de petite taille, et également la formation de grosses bulles à la surface de la mousse de lait contenue dans la tasse.

Par machine à café automatique, on comprend que la machine à café comprend notamment une chambre d'infusion qui peut être alimentée en mouture de café par un broyeur à grain incorporé dans la machine, ou une chambre d'infusion qui peut recevoir une capsule ou une dosette de café ou une chambre d'infusion formée par une cuillère destinée à être remplie de mouture de café et vidée manuellement.

La machine de distribution de boissons peut en outre présenter une ou plusieurs des caractéristiques suivantes, prises seules ou en combinaison.

Selon un mode de réalisation de l'invention, la machine de distribution de boissons est configurée de telle sorte qu'un déplacement de la tête de distribution entre la position haute et la position basse entraîne un déplacement, par exemple simultané, du dispositif de moussage de lait entre la position surélevée et la position abaissée.

Selon un mode de réalisation de l'invention, la machine de distribution de boissons est configurée de telle sorte que, lorsque le dispositif de moussage de lait occupe la position surélevée, la tête de distribution occupe la position haute, et de telle sorte que, lorsque le dispositif de moussage de lait occupe la position abaissée, la tête de distribution occupe la position basse.

Selon un mode de réalisation de l'invention, l'organe de raccordement est disposé au moins en partie dans le bâti, et est accessible depuis l'extérieur du bâti.

Selon un mode de réalisation de l'invention, l'organe de raccordement est relié mécaniquement à la tête de distribution de telle sorte qu'un déplacement de la tête de distribution entre la position haute et la position basse entraîne un déplacement du dispositif de moussage de lait entre la position surélevée et la position abaissée. Ces dispositions permettent à un utilisateur d'ajuster simultanément, et donc aisément et précisément, la position de la tête de distribution et du dispositif de moussage de lait en fonction de la taille de la tasse utilisée. De plus, le fait que l'organe de raccordement soit relié mécaniquement à la tête de distribution permet de simplifier la machine de distribution de boissons selon la présente invention, puisqu'il n'est pas nécessaire de prévoir de moyens spécifiques pour assurer le guidage en translation et le maintien en position de l'organe de raccordement et du dispositif de moussage de lait.

Selon un autre mode de réalisation de l'invention, l'organe de raccordement est monté mobile en translation par rapport au bâti et indépendamment de la tête de distribution.

Selon un mode de réalisation de l'invention, la machine de distribution de boissons comporte un chariot déplaçable verticalement par rapport au bâti, la tête de distribution étant montée sur le chariot.

Selon un mode de réalisation de l'invention, l'organe de raccordement est solidaire en mouvement du chariot.

Selon un mode de réalisation de l'invention, la machine de distribution de boissons comporte un organe de liaison configuré pour relier mécaniquement l'organe de raccordement au chariot.

Selon un mode de réalisation de l'invention, l'organe de raccordement et le chariot sont réalisés en une seule pièce.

Selon un mode de réalisation de l'invention, la machine de distribution de boissons comporte deux tiges de guidage fixées au bâti, le chariot étant monté coulissant sur les tiges de guidage selon une direction de coulissement qui est sensiblement verticale lorsque la machine de distribution de boissons repose sur une surface horizontale. Une telle configuration de la machine de distribution de boissons assure un guidage du chariot à l'aide d'un dispositif de guidage de structure simple et fiable.

Selon un mode de réalisation de l'invention, les tiges de guidage s'étendent sensiblement parallèlement l'une par rapport à l'autre.

Selon un mode de réalisation de l'invention, chacune des tiges de guidage présente une section circulaire.

Selon un mode de réalisation de l'invention, le bâti comporte une façade avant pourvue d'une fente de passage qui est configurée pour s'étendre sensiblement verticalement lorsque la machine de distribution de boissons repose sur une surface horizontale, l'organe de raccordement et/ou la partie de raccordement étant configuré(e)(s) pour s'étendre à travers la fente de passage et pour être déplacé(s) dans la fente de passage lorsque le dispositif de moussage de lait est déplacé verticalement entre la position abaissée et la position surélevée.

Selon un mode de réalisation de l'invention, le dispositif de moussage de lait est configuré pour être supporté par l'organe de raccordement.

Selon un mode de réalisation de l'invention, l'organe de raccordement est décalé latéralement par rapport à la tête de distribution.

Selon un mode de réalisation de l'invention, l'organe de raccordement comporte un embout de raccordement qui est configuré pour être relié fluidiquement à la chaudière et auquel la partie de raccordement est configurée pour être raccordée fluidiquement, et une partie de verrouillage, telle qu'un manchon de verrouillage, qui s'étend autour de l'embout de raccordement et qui est configurée pour verrouiller la partie de raccordement sur l'organe de raccordement.

Selon un mode de réalisation de l'invention, l'embout de raccordement s'étend selon une direction d'extension. De façon avantageuse, la direction d'extension est configurée pour s'étendre sensiblement horizontalement lorsque la machine de distribution de boissons repose sur une surface horizontale.

Selon un mode de réalisation de l'invention, l'embout de raccordement et la partie de verrouillage délimitent un logement annulaire configuré pour loger au moins en partie la partie de raccordement.

Selon un mode de réalisation de l'invention, la partie de verrouillage est configurée pour empêcher un déplacement de la partie de raccordement hors du logement annulaire, et en particulier selon une direction de retrait qui est sensiblement parallèle à la direction d'extension de l'embout de raccordement. Ces dispositions assurent un verrouillage optimal du dispositif de moussage de lait sur l'organe de raccordement, tout en assurant un positionnement optimal du dispositif de moussage de lait par rapport au bâti.

Selon un mode de réalisation de l'invention, la machine de distribution de boissons comporte un dispositif de blocage en rotation configuré pour bloquer en rotation la partie de raccordement par rapport à l'organe de raccordement et empêcher une rotation de la partie de raccordement autour d'un axe de rotation confondu avec un axe longitudinal central de l'embout de raccordement. Ces dispositions un positionnement optimal du dispositif de moussage de lait par rapport à la verticale.

Selon un mode de réalisation de l'invention, le dispositif de blocage en rotation comporte au moins un méplat prévu sur une surface interne de la partie de verrouillage, et au moins un méplat prévu sur une surface externe de la partie de raccordement et configuré pour coopérer avec l'au moins un méplat prévu sur la partie de verrouillage.

Selon un mode de réalisation de l'invention, la partie de verrouillage présente une section transversale qui est non-circulaire, et par exemple rectangulaire ou carrée, la surface interne de la partie de verrouillage formant en partie le dispositif de blocage en rotation.

Selon un mode de réalisation de l'invention, la partie de verrouillage et la partie de raccordement sont configurées pour orienter le dispositif de moussage de lait sensiblement verticalement lorsque la machine de distribution de boissons repose sur une surface horizontale.

Selon un mode de réalisation de l'invention, la partie de verrouillage comporte au moins une languette de verrouillage qui est élastiquement déformable et qui est pourvue, sur sa surface interne, d'un organe de verrouillage, tel qu'une saillie de verrouillage, configuré pour coopérer avec un élément de verrouillage, tel qu'un logement de verrouillage, prévu sur une surface externe de la partie de raccordement.

Selon un mode de réalisation de l'invention, le dispositif de moussage de lait comporte un conduit de déversement de mousse de lait, par exemple pourvu d'un bec de déversement, configuré pour être situé verticalement au-dessus d'un récipient, tel qu'une tasse.

Selon un mode de réalisation de l'invention, la machine de distribution de boissons comporte un support de récipient sur lequel un récipient, tel qu'une tasse, peut être disposé, la tête de distribution et le dispositif de moussage de lait étant déplaçables verticalement par rapport au support de récipient. Avantageusement, le support de récipient est fixe. Le support de récipient peut par exemple comporter une grille de support.

Selon un mode de réalisation de l'invention, la machine de distribution de boissons comporte un dispositif de maintien configuré pour maintenir en position la tête de distribution.

Selon un mode de réalisation de l'invention, au moins l'une des tiges de guidage est métallique, et le dispositif de maintien comporte au moins un aimant configuré pour coopérer magnétiquement avec l'au moins une tige de guidage qui est métallique.

Selon un mode de réalisation de l'invention, le dispositif de moussage de lait comporte une chambre de mélange, un conduit d'amenée d'eau chaude/vapeur relié fluidiquement à la partie de raccordement, un conduit d'écoulement principal reliant le conduit d'amenée d'eau chaude/vapeur à la chambre de mélange, un conduit d'amenée de lait relié au conduit d'écoulement principal, et un conduit d'amenée d'air relié au conduit d'écoulement principal.

Selon un mode de réalisation de l'invention, le conduit de déversement de mousse de lait est relié fluidiquement à un orifice de sortie de la chambre de mélange.

Selon un mode de réalisation de l'invention, le dispositif de moussage de lait comporte :
- une partie de mélange comprenant la chambre de mélange, le conduit d'amenée d'eau chaude/vapeur et le conduit d'écoulement principal, et
- une partie de fermeture mobile par rapport à la partie de mélange entre une position de fermeture dans laquelle la partie de fermeture ferme la chambre de mélange et le conduit d'écoulement principal et une position d'ouverture dans laquelle la chambre de mélange et le conduit d'écoulement principal sont ouverts et accessibles pour être nettoyés.

Une telle configuration du dispositif de moussage de lait permet un nettoyage aisé de la chambre de mélange et du conduit d'écoulement principal.

Selon un mode de réalisation de l'invention, le réservoir de lait comprend une ouverture supérieure, la partie de mélange étant agencée au niveau de l'ouverture supérieure.

Selon un mode de réalisation de l'invention, la partie de mélange et la partie de fermeture sont configurées pour fermer le réservoir de lait et pour être amovibles par rapport au réservoir de lait. En d'autres termes, la partie de mélange et la partie de fermeture forment un couvercle configuré pour fermer le réservoir de lait.

Selon un mode de réalisation de l'invention, le conduit d'écoulement principal comporte une restriction de section formant un système d'aspiration de lait et d'air basé sur l'effet venturi. En d'autres termes, le conduit d'écoulement principal est configuré de telle sorte qu'un écoulement d'eau chaude/vapeur dans le conduit d'écoulement principal depuis le conduit d'amenée d'eau chaude/vapeur et jusque la chambre de mélange génère une dépression dans le conduit d'amenée de lait et une dépression dans le conduit d'amenée d'air et entraîne une aspiration de lait et d'air dans le conduit d'écoulement principal. Une telle configuration du dispositif de moussage de lait permet de contrôler la quantité d'air et la quantité de lait admises dans la chambre de mélange, sans requérir la présence de moyens d'admission complexes et onéreux.

Selon un mode de réalisation de l'invention, la machine de distribution de boissons comporte un tube d'amenée d'eau chaude/vapeur, par exemple flexible, configuré pour relier fluidiquement l'organe de raccordement à la chaudière.

Selon un mode de réalisation de l'invention, le conduit d'amenée de lait débouche dans le conduit d'écoulement principal à proximité de la restriction de section.

Selon un mode de réalisation de l'invention, la partie de mélange comporte une face supérieure dans laquelle est ménagé le conduit d'écoulement principal et dans laquelle débouche la chambre de mélange.

Selon un mode de réalisation de l'invention, le conduit d'amenée d'air débouche dans le conduit d'écoulement principal à proximité de la restriction de section.

Selon un mode de réalisation de l'invention, la partie de fermeture est configurée pour recouvrir la partie de mélange.

Selon un mode de réalisation de l'invention, le dispositif de moussage de lait comporte un système de maintien configuré pour maintenir la partie de fermeture en position de fermeture. Une telle configuration du système de maintien permet d'éviter un déplacement intempestif de la partie de fermeture vers la position d'ouverture.

Selon un mode de réalisation de l'invention, la partie de fermeture comporte une ouverture de remplissage configurée pour permettre une introduction de lait dans le réservoir de lait.

Selon un mode de réalisation de l'invention, le système de maintien est configuré pour fixer de manière amovible, c'est-à-dire de manière temporaire et réversible, la partie de mélange et la partie de fermeture au réservoir de lait.

### Brève description des figures

L'invention sera mieux comprise à l'aide de la description qui suit en référence aux dessins schématiques annexés représentant, à titre d'exemple non limitatif, une forme d'exécution de cette machine de distribution de boissons.
[Fig 1] est une vue en perspective avant d'une machine de distribution de boissons selon la présente invention, montrant une tête de distribution et un dispositif de moussage de lait respectivement en position haute et en position surélevée.
[Fig 2] est une vue partielle en perspective avant de la machine de distribution de boissons de la figure 1, montrant la tête de distribution et le dispositif de moussage de lait respectivement en position basse et en position abaissée.
[Fig 3] est une vue de face de la machine de distribution de boissons de la figure 1, montrant la tête de distribution et le dispositif de moussage de lait respectivement en position haute et en position surélevée.
[Fig 4] est une vue de face de la machine de distribution de boissons de la figure 1, montrant la tête de distribution et le dispositif de moussage de lait respectivement en position basse et en position abaissée.
[Fig 5] est une vue partielle en perspective arrière de la machine de distribution de boissons de la figure 1.
[Fig 6] est une vue partielle arrière de la machine de distribution de boissons de la figure 1, dans laquelle la tête de distribution et le dispositif de moussage de lait occupent respectivement la position basse et la position abaissée.
[Fig 7] est une vue partielle arrière de la machine de distribution de boissons de la figure 1, dans laquelle la tête de distribution et le dispositif de moussage de lait occupent respectivement la position haute et la position surélevée.
[Fig 8] est une vue en perspective avant d'un chariot et d'un organe de raccordement appartenant à la machine de distribution de boissons de la figure 1.
[Fig 9] est une vue en perspective arrière du chariot et de l'organe de raccordement de la figure 8.
[Fig 10] est une vue partielle en coupe longitudinale de la machine de distribution de boissons de la figure 1.
[Fig 11] est une vue en coupe longitudinale du dispositif de distribution de boissons.
[Fig 12] est une vue en perspective de dessus d'une partie de mélange du dispositif de moussage de lait.
[Fig 13] est une vue partielle de dessus de la partie de mélange de la figure 12.

### Description détaillée

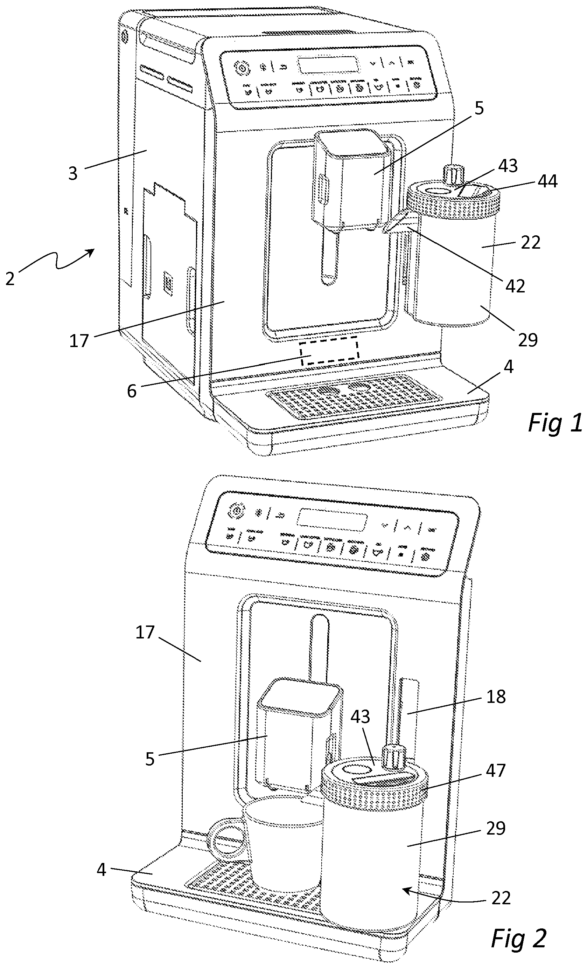

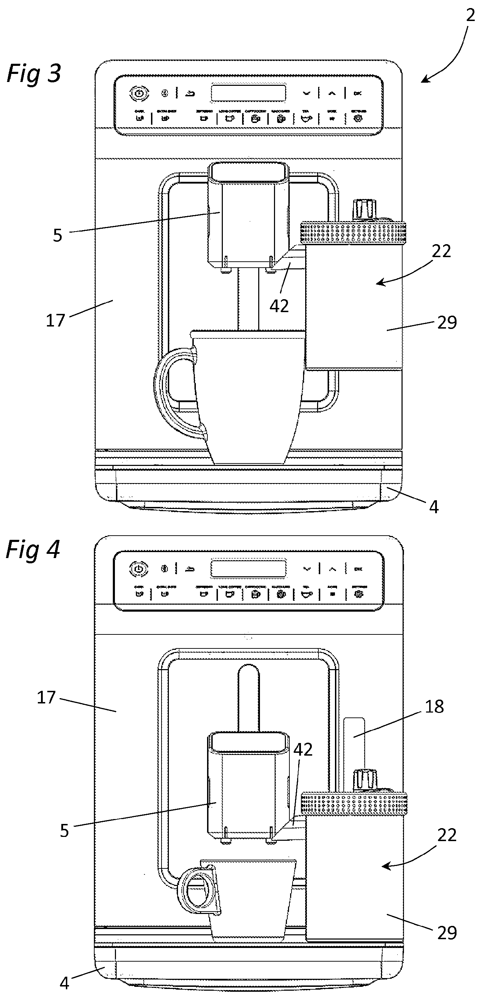

Les figures 1 à 13 représentent une machine de distribution de boissons 2, et plus particulièrement une machine à café automatique, adaptée pour distribuer notamment du café, des boissons lactées ou encore du thé.

La machine de distribution de boissons 2 comporte notamment un bâti 3, un support de récipient 4 sur lequel une tasse peut être disposée, et une tête de distribution 5 qui est réglable en hauteur. Le support de récipient 4 peut par exemple comporter une grille de support.

La machine de distribution de boissons 2 comporte également une chaudière 6 disposée dans le bâti 3 et configurée pour produire de l'eau chaude et/ou de la vapeur.

La tête de distribution 5 est plus particulièrement déplaçable verticalement par rapport au support de récipient 4 et au bâti 3 entre une position basse dans laquelle une tasse de petite taille, telle qu'une tasse destinée à contenir un ristretto, peut être disposée sur le support de récipient 4 et être alimentée en boisson, par exemple en café, à partir de la tête de distribution 5, et une position haute dans laquelle une tasse de grande taille, telle qu'un mug, peut être disposée sur le support de récipient 4 et être alimentée en boisson, par exempleen eau chaude, à partir de la tête de distribution 5.

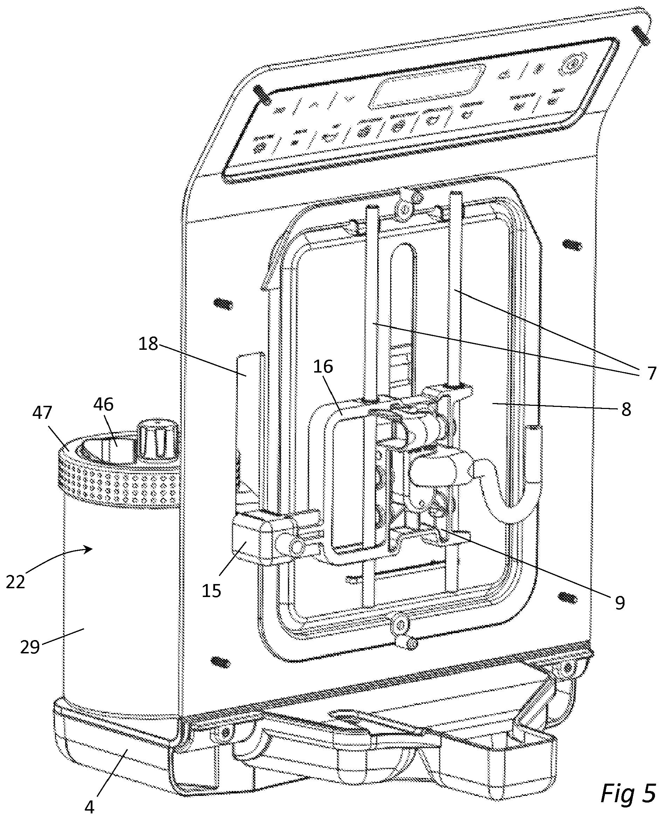

Comme montré sur les figures 5 à 7, la machine de distribution de boissons 2 comporte également deux tiges de guidage 7 qui sont métalliques et qui s'étendent sensiblement parallèlement l'une par rapport à l'autre. Les tiges de guidage 7 sont fixées, par exemple par encastrement, sur le bâti 3, et plus particulièrement sur une plaque de support 8 qui est sensiblement verticale et qui appartient au bâti 3. Les tiges de guidage 7 sont en particulier immobiles en translation par rapport au bâti 3 et s'étendent sensiblement verticalement. Chacune des tiges de guidage 7 présente avantageusement une section circulaire.

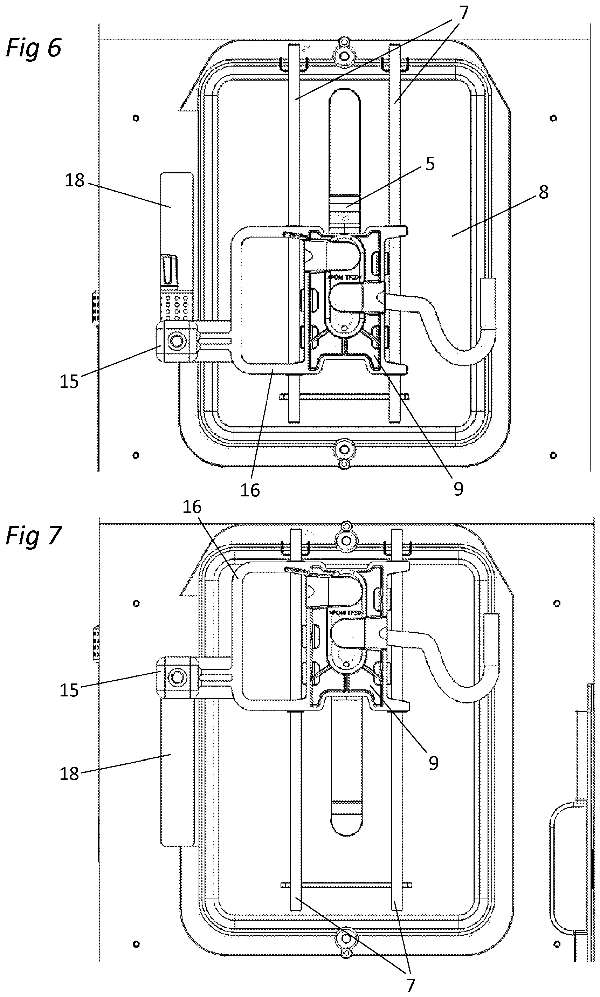

La machine de distribution de boissons 2 comporte en outre un chariot 9 (voir notamment le figures 6 à 9) monté coulissant sur les tiges de guidage 7 selon une direction de coulissement qui est sensiblement verticale lorsque la machine de distribution de boissons 2 repose sur une surface horizontale. Le chariot 9 est avantageusement réalisé en matière plastique.

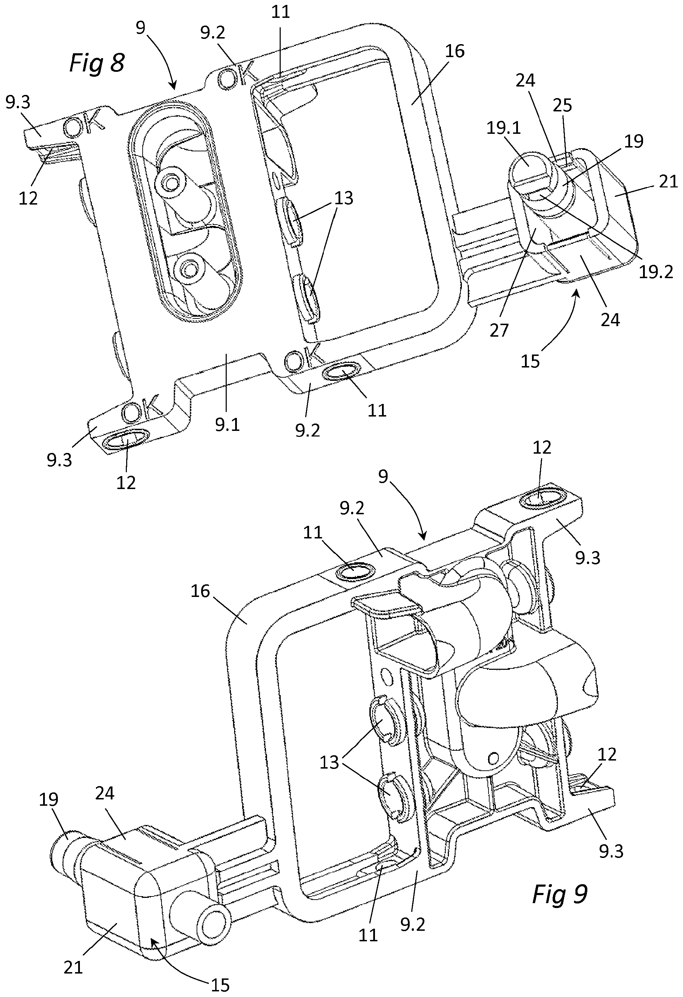

Comme montré sur les figures 8 et 9, le chariot 9 comporte une portion de montage 9.1 qui est disposée entre les deux tiges de guidage 7 et sur laquelle est montée la tête de distribution 5, par exemple par montage en force et/ou par bridage à l'aide de vis de fixation.

Le chariot 9 comporte également deux portions de guidage primaires 9.2 décalées verticalement l'une par rapport à l'autre et disposées d'un premier côté de la portion de montage 9.1, et deux portions de guidage secondaire 9.3 décalées verticalement l'une par rapport à l'autre et disposées d'un deuxième côté de la portion de montage 9.1. Chaque portion de guidage primaire 9.2 est pourvue d'un orifice de guidage primaire 11, et chaque portion de guidage secondaire 9.3 est pourvue d'un orifice de guidage secondaire 12. L'une des tiges de guidage 7 s'étend à travers les orifices de guidage primaires 11, tandis que l'autre des tiges de guidage 7 s'étend à travers les orifices de guidage secondaires 12.

Selon le mode de réalisation représenté sur les figures, chaque orifice de guidage primaire 11 présente une section circulaire, et chaque orifice de guidage secondaire 12 présente une section oblongue. Ainsi, chaque orifice de guidage primaire 11 est relié à la tige de guidage 7 respective par une liaison pivot glissant, et chaque orifice de guidage secondaire 12 est relié à la tige de guidage 7 respective par une liaison ponctuelle.

La machine de distribution de boissons 2 comporte de plus un dispositif de maintien configuré pour maintenir en position le chariot 9 et la tête de distribution 5 par rapport aux tiges de guidage 7. Le dispositif de maintien comporte par exemple une pluralité d'aimants 13 qui coopèrent magnétiquement chacun avec une des tiges de guidage 7. Avantageusement, chaque aimant 13 est un aimant permanent, et est logé dans un logement de réception respectif ménagé sur la portion de montage 9.1 du chariot 9 et débouchant dans une surface latérale respective de la portion de montage 9.1.

La machine de distribution de boissons 2 comporte également un organe de raccordement 15 qui est configuré pour être relié fluidiquement à la chaudière 6 et pour être alimenté en eau chaude et/ou en vapeur d'eau provenant de la chaudière 6. La machine de distribution de boissons 2 peut par exemple comporter un tube d'amenée d'eau chaude/vapeur (non visible sur les figures) configuré pour relier fluidiquement l'organe de raccordement 15 à la chaudière 6.

Selon le mode de réalisation représenté sur les figures, l'organe de raccordement 15 est décalé latéralement par rapport à la tête de distribution 5 et est solidaire en mouvement du chariot 9, et est donc également monté mobile en translation par rapport au bâti 3 selon une direction de déplacement qui est verticale lorsque la machine de distribution de boissons 2 repose sur une surface horizontale. De façon avantageuse, l'organe de raccordement 15 est relié mécaniquement au chariot 9 par un organe de liaison 16. L'organe de raccordement 15, le chariot 9 et l'organe de liaison 16 peuvent par exemple être réalisés en une seule pièce.

Selon le mode de réalisation représenté sur les figures, le bâti 3 comporte une façade avant 17 pourvue d'une fente de passage 18 (voir notamment les figures 2 et 6) qui est configurée pour s'étendre sensiblement verticalement lorsque la machine de distribution de boissons 2 repose sur une surface horizontale. L'organe de raccordement 15 est configuré pour être accessible, pour un utilisateur, à travers la fente de passage 18, et avantageusement pour s'étendre en partie à travers la fente de passage 18 et pour être déplacé le long de la fente de passage 18 lorsque le chariot 9 est déplacé verticalement.

Selon le mode de réalisation représenté sur les figures, l'organe de raccordement 15 comporte un embout de raccordement 19 qui est configuré pour être relié fluidiquement à la chaudière 6 et qui s'étend selon une direction d'extension configurée pour s'étendre sensiblement horizontalement lorsque la machine de distribution de boissons 2 repose sur une surface horizontale.

L'embout de raccordement 19 est globalement tubulaire et comporte une première extrémité configurée pour être reliée fluidiquement à la chaudière 6 et une deuxième extrémité opposée à la première extrémité. De façon avantageuse, l'embout de raccordement 19 est pourvu d'une paroi d'extrémité 19.1 obturant la deuxième extrémité de l'embout de raccordement 19, et d'une ouverture de sortie 19.2 située à proximité de la paroi d'extrémité 19.1.

L'organe de raccordement 15 comporte en outre une partie de verrouillage 21, telle qu'un manchon de verrouillage, qui s'étend autour de l'embout de raccordement 19 et dont la fonction sera décrite plus en détail ci-après.

La machine de distribution de boissons 2 comporte en outre un dispositif de moussage de lait 22 qui est réglable en hauteur et qui est déplaçable verticalement par rapport au bâti 3 entre une position abaissée et une position surélevée. Le dispositif de moussage de lait 22 est plus particulièrement monté mobile en translation par rapport au bâti 3 selon une direction de déplacement qui est verticale lorsque la machine de distribution de boissons 2 repose sur une surface horizontale.

Selon le mode de réalisation représenté sur les figures, la machine de distribution de boissons 2 est configurée de telle sorte qu'un déplacement de la tête de distribution 5 entre la position haute et la position basse entraîne un déplacement simultané du dispositif de moussage de lait 22 entre la position surélevée et la position abaissée. De façon avantageuse, la machine de distribution de boissons 2 est configurée de telle sorte que, lorsque le dispositif de moussage de lait 22 occupe la position surélevée, la tête de distribution 5 occupe la position haute, et de telle sorte que, lorsque le dispositif de moussage de lait 22 occupe la position abaissée, la tête de distribution 5 occupe la position basse.

Cependant, selon une variante de réalisation de l'invention, le dispositif de moussage de lait 22 pourrait être monté mobile en translation par rapport au bâti 3 indépendamment de la tête de distribution 5.

Le dispositif de moussage de lait 22 comporte plus particulièrement une partie de raccordement 23 qui est tubulaire et qui est configurée pour être raccordée mécaniquement et fluidiquement à l'organe de raccordement 15, et plus particulièrement à l'embout de raccordement 19. La partie de raccordement 23 est ainsi configurée pour alimenter le dispositif de moussage de lait 22 en eau chaude et/ou en vapeur d'eau. De façon avantageuse, l'organe de raccordement 15 est configuré pour supporter le dispositif de moussage de lait 22 via la partie de raccordement 23.

La partie de verrouillage 21, prévue sur l'organe de raccordement 15, est configurée pour verrouiller la partie de raccordement 23 sur l'organe de raccordement 15, et plus particulièrement pour empêcher un déplacement de la partie de raccordement 23 hors d'un logement annulaire délimité par l'embout de raccordement 19 et la partie de verrouillage 21, et en particulier selon une direction de retrait qui est sensiblement parallèle à la direction d'extension de l'embout de raccordement 19.

Selon le mode de réalisation représenté sur les figures, la partie de verrouillage 21 comporte au moins une languette de verrouillage 24, et par exemple deux languettes de verrouillage 24 qui sont diamétralement opposées. De façon avantageuse, la ou chaque languette de verrouillage 24 est élastiquement déformable et est pourvue, sur sa surface interne, d'un organe de verrouillage 25, tel qu'une saillie de verrouillage, configuré pour coopérer avec un élément de verrouillage 26, tel qu'un logement de verrouillage, prévu sur une surface externe de la partie de raccordement 23.

De façon avantageuse, la partie de verrouillage 21 et la partie de raccordement 23 sont configurées pour orienter le dispositif de moussage de lait 22 sensiblement verticalement lorsque la machine de distribution de boissons 2 repose sur une surface horizontale.

La machine de distribution de boissons 2 comporte avantageusement un dispositif de blocage en rotation configuré pour bloquer en rotation la partie de raccordement 23 par rapport à l'organe de raccordement 15, et ainsi empêcher une rotation de la partie de raccordement 23 autour d'un axe de rotation confondu avec un axe longitudinal central de l'embout de raccordement 19.

Selon le mode de réalisation représenté sur les figures, le dispositif de blocage en rotation comporte au moins un premier méplat 27 prévu sur une surface interne de la partie de verrouillage 21, et au moins un deuxième méplat 28 prévu sur une surface externe de la partie de raccordement 23 et configuré pour coopérer avec l'au moins un premier méplat prévu sur la partie de verrouillage 21. De façon avantageuse, la partie de verrouillage 21 et la partie de raccordement 23 présentent chacune une section transversale qui est globalement rectangulaire ou carrée.

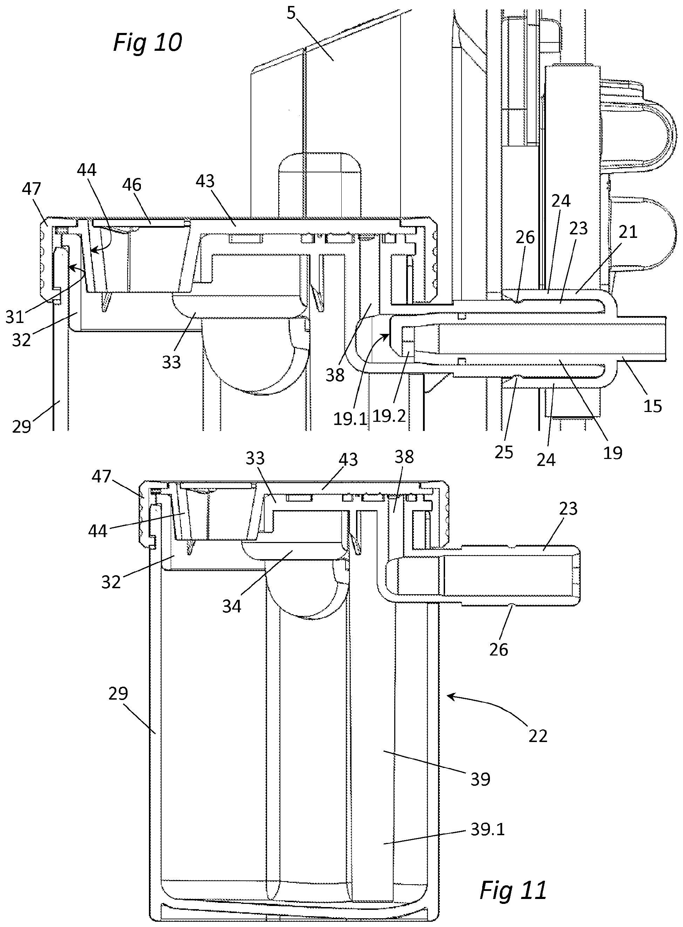

Comme montré plus particulièrement sur la figure 11, le dispositif de moussage de lait 22 comporte un réservoir de lait 29 délimitant un volume interne destiné à contenir du lait et comprenant une ouverture supérieure 31. Le réservoir de lait 29 peut par exemple avoir une forme globalement cylindrique, et présenter une section traversable circulaire. Toutefois, le réservoir de lait 29 pourrait également présenter une toute autre forme, et par exemple présenter une section traversable oblongue ou encore rectangulaire.

Le dispositif de moussage de lait 22 comporte en outre une partie de mélange 32 agencée au niveau de l'ouverture supérieure 31. La partie de mélange 32 comporte plus particulièrement un corps de mélange 33 configuré pour fermer partiellement le réservoir de lait 29 et pour être amovible par rapport au réservoir de lait 29.

Le corps de mélange 33 comporte une chambre de mélange 34 qui débouche dans la face supérieure du corps de mélange 33 et qui est munie d'un orifice de sortie 35, et en outre un conduit d'écoulement principal 36 ménagé dans la face supérieure du corps de mélange 33 et débouchant dans la chambre de mélange 34. Selon le mode de réalisation représenté sur les figures, la chambre de mélange 34 est du type cyclonique, et le conduit d'écoulement principal 36 débouche tangentiellement dans la chambre de mélange 34.

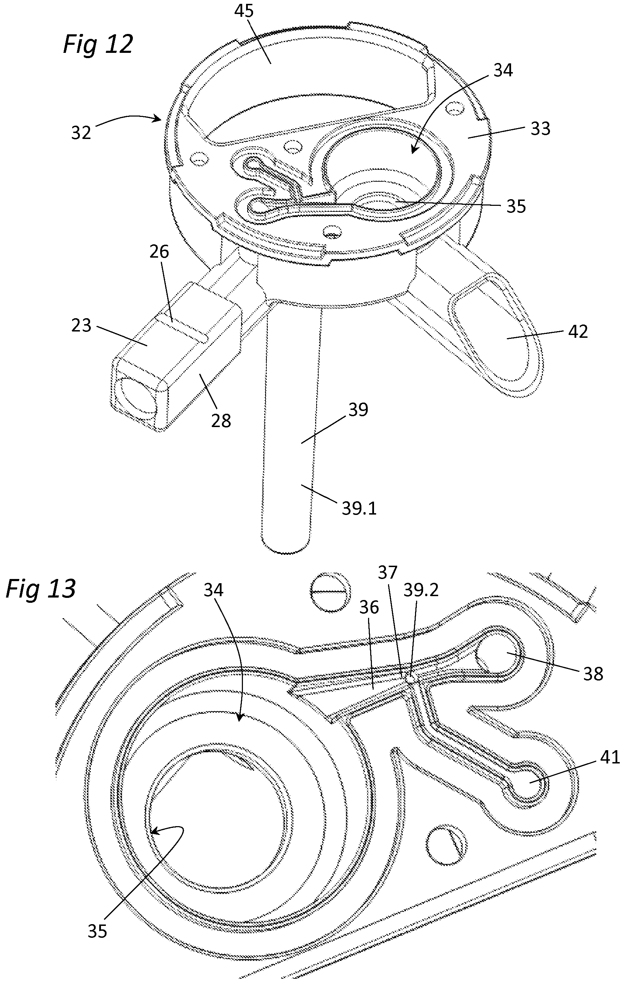

Comme montré plus particulièrement sur la figure 13, le conduit d'écoulement principal 36 comporte une restriction de section 37 située par exemple dans une portion centrale du conduit d'écoulement principal 36.

Selon le mode de réalisation représenté sur les figures, le corps de mélange 33 comporte également la partie de raccordement 23. De façon avantageuse, la partie de raccordement 23 s'étend radialement par rapport à un axe central du corps de mélange 33, et est configurée pour s'étendre radialement par rapport à l'axe central du réservoir de lait 29.

Le corps de mélange 33 comporte de plus un conduit d'amenée d'eau chaude/vapeur 38 qui est relié fluidiquement à la partie de raccordement 23 et qui débouche dans le conduit d'écoulement principal 36 en amont de la restriction de section 37. Le conduit d'écoulement principal 36 est ainsi configuré pour relier fluidiquement le conduit d'amenée d'eau chaude/vapeur 38 à la chambre de mélange 34, et pour permettre un écoulement d'eau chaude/vapeur dans le conduit d'écoulement principal 36 et jusque la chambre de mélange 34.

Le dispositif de moussage de lait 22 comporte également un conduit d'amenée de lait 39 relié fluidiquement au conduit d'écoulement principal 36, et donc configuré pour être relié fluidiquement à la chambre de mélange 34 via le conduit d'écoulement principal 36. Selon le mode de réalisation représenté sur les figures, la partie de mélange 32 comporte le conduit d'amenée de lait 39.

Comme montré plus particulièrement sur la figure 11, le conduit d'amenée de lait 39 comporte un tube d'aspiration de lait 39.1 s'étendant verticalement et débouchant dans une partie inférieure du réservoir de lait 29, et un passage d'écoulement calibré 39.2 situé en aval du tube d'aspiration de lait 39.1 et débouchant dans le conduit d'écoulement principal 36 au niveau de la restriction de section 37. Le passage d'écoulement calibré 39.2 est plus particulièrement configuré pour définir un débit de lait prédéterminé dans le conduit d'amenée de lait 39.

Le dispositif de moussage de lait 22 comporte en outre un conduit d'amenée d'air 41 qui débouche dans le conduit d'écoulement principal 36 au niveau de la restriction de section 37. Le conduit d'amenée d'air 41 est ainsi configuré pour être relié fluidiquement à la chambre de mélange 34 via le conduit d'écoulement principal 36. Selon le mode de réalisation représenté sur les figures, le conduit d'amenée d'air 41 est ménagé au moins en partie dans la face supérieure du corps de mélange 33.

La restriction de section 37, décrite préalablement, induit une augmentation de la vitesse de la vapeur s'écoulant dans le conduit d'écoulement principal 36, ce qui génère une dépression dans le conduit d'amenée de lait 39 et dans le conduit d'amenée d'air 41. La restriction de section 37 est donc plus particulièrement configurée pour former un système d'aspiration de lait et d'air basé sur l'effet venturi. Le conduit d'écoulement principal 36 est ainsi configuré de telle sorte qu'un écoulement d'eau chaude/vapeur dans le conduit d'écoulement principal 36 depuis le conduit d'amenée d'eau chaude/vapeur 38 et jusque la chambre de mélange 34 génère une dépression dans le conduit d'amenée de lait 39 et une dépression dans le conduit d'amenée d'air 41 et entraîne par conséquent une aspiration de lait et d'air dans le conduit d'écoulement principal 36 et écoulement du lait et de l'air aspirés jusque la chambre de mélange 34.

Le corps de mélange 33 comporte en outre un conduit de déversement de mousse de lait 42 relié fluidiquement à l'orifice de sortie 35 de la chambre de mélange 34 et par exemple pourvu d'un bec de déversement. Le conduit de déversement de mousse de lait 42 est configuré pour permettre un déversement de lait chaud et de mousse de lait dans un récipient, tel qu'une tasse, disposée verticalement en dessous du conduit de déversement de lait 24, et en particulier reposant sur le support de récipient 4. De façon avantageuse, le conduit de déversement de lait 24 est configuré pour s'étendre radialement par rapport à l'axe central du réservoir de lait 29.

Le dispositif de moussage de lait 22 comporte de plus une partie de fermeture 43 configurée pour recouvrir le corps de mélange 33 et pour prendre appui contre le corps de mélange 33. Comme montré sur la figure 11, la partie de fermeture 43 est globalement plane.

La partie de mélange 32 et la partie de fermeture 43 sont configurées pour fermer le réservoir de lait 29 et pour être amovibles par rapport au réservoir de lait 29. La partie de mélange 32 et la partie de fermeture 43 forment ainsi un couvercle configuré pour fermer le réservoir de lait 29.

Selon le mode de réalisation représenté sur les figures, la partie de fermeture 43 comporte une ouverture de remplissage 44 configurée pour être située en regard d'une ouverture de passage 45 prévue sur le corps de mélange 33 et débouchant dans le réservoir de lait 29, et donc pour permettre le remplissage du réservoir de lait 29 avec du lait. La partie de fermeture 43 pourrait éventuellement comporter en outre un volet 46 mobile, et par exemple monté pivotant, entre une position ouverte dans laquelle le volet 46 libère au moins partiellement l'ouverture de remplissage 44 et autorise une introduction de lait dans le réservoir de lait 29 et une position fermée dans laquelle le volet 46 obture au moins partiellement l'ouverture de remplissage 44.

La partie de fermeture 43 est plus particulièrement montée mobile par rapport à la partie de mélange 32 entre une position de fermeture dans laquelle la partie de fermeture 43 ferme la chambre de mélange 34, le conduit d'écoulement principal 36 et le conduit d'amenée d'air 41, et une position d'ouverture dans laquelle la chambre de mélange 34, le conduit d'écoulement principal 36 et le conduit d'amenée d'air 41 sont ouverts et accessibles pour être nettoyés.

Selon une variante de réalisation de l'invention non représentée sur les figures, la partie de fermeture 43 pourrait comporter en outre un conduit d'admission d'air relié au conduit d'écoulement principal 36 via le conduit d'amenée d'air 41. Selon une autre variante de réalisation de l'invention non représentée sur les figures, le conduit d'amenée d'air 41 pourrait être prévu sur la partie de fermeture 43, et non pas sur la partie de mélange 32.

Le dispositif de moussage de lait 22 comporte également un système de maintien configuré pour maintenir la partie de fermeture 43 en position de fermeture. Selon le mode de réalisation représenté sur les figures, le système de maintien est également configuré pour fixer de manière amovible, c'est-à-dire de manière temporaire et réversible, la partie de mélange 32 et la partie de fermeture 43 au réservoir de lait 29. Cependant, une telle fixation de la partie de mélange 32 et de la partie de fermeture 43 au réservoir de lait 29 pourrait être réalisé par un dispositif de liaison distinct du système de maintien.

Comme montré sur les figures 2 et 11, le système de maintien comporte une bague de verrouillage 47 montée mobile en rotation par rapport à la partie de mélange 32 et au réservoir de lait 29 autour d'un axe de rotation et entre une position de libération dans laquelle la bague de verrouillage 47 autorise un déplacement de la partie de fermeture 43 vers la position d'ouverture et une position de verrouillage dans laquelle la bague de verrouillage 47 empêche un déplacement de la partie de fermeture 43 vers la position d'ouverture. Selon le mode de réalisation représenté sur les figures, la bague de verrouillage 47 et la partie de fermeture 43 sont réalisées en une seule pièce.

Bien entendu, la présente invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention, tel que défini par les revendications annexées.

## Revendications

1. Machine de distribution de boissons (2) comportant :
- un bâti (3),
- une chaudière (6) disposée dans le bâti (3) et configurée pour produire de l'eau chaude et/ou de la vapeur,
- une tête de distribution (5) qui est réglable en hauteur et est déplaçable verticalement par rapport au bâti (3) entre une position basse et une position haute,
- un organe de raccordement (15) qui est configuré pour être relié fluidiquement à la chaudière (6) et pour être alimenté en eau chaude et/ou en vapeur d'eau provenant de la chaudière (6), et
- un dispositif de moussage de lait (22) comportant un réservoir de lait (29) délimitant un volume interne destiné à contenir du lait, et une partie de raccordement (23) configurée pour être raccordée mécaniquement et fluidiquement à l'organe de raccordement (15) et pour alimenter le dispositif de moussage de lait (22) en eau chaude et/ou en vapeur d'eau,
caractérisée ce que l'organe de raccordement (15) est déplaçable verticalement par rapport au bâti (3) et en ce que le dispositif de moussage de lait (22) est réglable en hauteur et est déplaçable verticalement par rapport au bâti (3) entre une position abaissée et une position surélevée.

2. Machine de distribution de boissons (2) selon la revendication 1, dans laquelle l'organe de raccordement (15) est relié mécaniquement à la tête de distribution (5) de telle sorte qu'un déplacement de la tête de distribution (5) entre la position haute et la position basse entraîne un déplacement du dispositif de moussage de lait (22) entre la position surélevée et la position abaissée.

3. Machine de distribution de boissons (2) selon la revendication 1 ou 2, laquelle comporte un chariot (9) déplaçable verticalement par rapport au bâti (3), la tête de distribution (5) étant montée sur le chariot (9).

4. Machine de distribution de boissons (2) selon la revendication 3, dans laquelle l'organe de raccordement (15) est solidaire en mouvement du chariot (9).

5. Machine de distribution de boissons (2) selon la revendication 3 ou 4, dans laquelle l'organe de raccordement (15) et le chariot (9) sont réalisés en une seule pièce.

6. Machine de distribution de boissons (2) selon l'une quelconque des revendications 3 à 5, laquelle comporte deux tiges de guidage (7) fixées au bâti (3), le chariot (9) étant monté coulissant sur les tiges de guidage (7) selon une direction de coulissement qui est sensiblement verticale lorsque la machine de distribution de boissons (2) repose sur une surface horizontale.

7. Machine de distribution de boissons (2) selon l'une quelconque des revendications 1 à 6, dans laquelle le bâti (3) comporte une façade avant (17) pourvue d'une fente de passage (18) qui est configurée pour s'étendre sensiblement verticalement lorsque la machine de distribution de boissons (2) repose sur une surface horizontale, l'organe de raccordement (15) et/ou la partie de raccordement (23) étant configuré(e)(s) pour s'étendre à travers la fente de passage (18) et pour être déplacé(s) dans la fente de passage (18) lorsque le dispositif de moussage de lait (22) est déplacé verticalement entre la position abaissée et la position surélevée.

8. Machine de distribution de boissons (2) selon l'une quelconque des revendications 1 à 7, dans laquelle l'organe de raccordement (15) comporte un embout de raccordement (19) qui est configuré pour être relié fluidiquement à la chaudière (6) et auquel la partie de raccordement (23) est configurée pour être raccordée fluidiquement, et une partie de verrouillage (21) qui s'étend autour de l'embout de raccordement (19) et qui est configurée pour verrouiller la partie de raccordement (23) sur l'organe de raccordement (15).

9. Machine de distribution de boissons (2) selon la revendication 8, laquelle comporte un dispositif de blocage en rotation configuré pour bloquer en rotation la partie de raccordement (23) par rapport à l'organe de raccordement (15) et empêcher une rotation de la partie de raccordement (23) autour d'un axe de rotation confondu avec un axe longitudinal central de l'embout de raccordement (19).

10. Machine de distribution de boissons (2) selon l'une quelconque des revendications 1 à 9, dans laquelle le dispositif de moussage de lait (22) comporte un conduit de déversement de mousse de lait (42) configuré pour être situé verticalement au-dessus d'un récipient.

11. Machine de distribution de boissons (2) selon l'une quelconque des revendications 1 à 10, dans laquelle le dispositif de moussage de lait (22) comporte une chambre de mélange (34), un conduit d'amenée d'eau chaude/vapeur (38) relié fluidiquement à la partie de raccordement (23), un conduit d'écoulement principal (36) reliant le conduit d'amenée d'eau chaude/vapeur (38) à la chambre de mélange (34), un conduit d'amenée de lait (39) relié au conduit d'écoulement principal (36), et un conduit d'amenée d'air (41) relié au conduit d'écoulement principal (36).

12. Machine de distribution de boissons (2) selon la revendication 11, dans laquelle le dispositif de moussage de lait (22) comporte :
- une partie de mélange (32) comprenant la chambre de mélange (34), le conduit d'amenée d'eau chaude/vapeur (38) et le conduit d'écoulement principal (36), et
- une partie de fermeture (43) mobile par rapport à la partie de mélange (32) entre une position de fermeture dans laquelle la partie de fermeture (43) ferme la chambre de mélange (34) et le conduit d'écoulement principal (36) et une position d'ouverture dans laquelle la chambre de mélange (34) et le conduit d'écoulement principal (36) sont ouverts et accessibles pour être nettoyés.

13. Machine de distribution de boissons (2) selon la revendication 11 ou 12, dans laquelle le conduit d'écoulement principal (36) comporte une restriction de section (37) formant un système d'aspiration de lait et d'air basé sur l'effet venturi.

## Patentansprüche

1. Getränkeausgabemaschine (2), aufweisend:
• ein Gehäuse (3),
• einen Kessel (6), der in dem Gehäuse (3) angeordnet und dazu eingerichtet ist, Heißwasser und/oder Dampf zu erzeugen,
• einen Ausgabekopf (5), der in der Höhe einstellbar und relativ zu dem Gehäuse (3) zwischen einer unteren Position und einer oberen Position vertikal verschiebbar ist,
• ein Anschlussorgan (15), das dazu eingerichtet ist, fluidisch mit dem Kessel (6) verbunden zu werden und mit aus dem Kessel (6) stammendem Heißwasser und/oder Wasserdampf versorgt zu werden, und
• eine Milchaussschäumvorrichtung (22) mit einem Milchbehälter (29), der ein Innenvolumen zur Aufnahme von Milch begrenzt, und einem Anschlussteil (23), das dazu eingerichtet ist, mechanisch und fluidisch mit dem Anschlussorgan (15) verbunden zu werden und die Milchaussschäumvorrichtung (22) mit Heißwasser und/oder Wasserdampf zu versorgen, **dadurch gekennzeichnet, dass** das Anschlussorgan (15) relativ zu dem Gehäuse (3) vertikal verschiebbar ist und dass die Milchaussschäumvorrichtung (22) in der Höhe einstellbar und relativ zu dem Gehäuse (3) zwischen einer abgesenkten Position und einer angehobenen Position vertikal verschiebbar ist.

2. Getränkeausgabemaschine (2) nach Anspruch 1, wobei das Anschlussorgan (15) mechanisch mit dem Ausgabekopf (5) verbunden ist, so dass eine Verschiebung des Ausgabekopfes (5) zwischen der oberen Position und der unteren Position eine Verschiebung der Milchaussschäumvorrichtung (22) zwischen der angehobenen Position und der abgesenkten Position bewirkt.

3. Getränkeausgabemaschine (2) nach Anspruch 1 oder 2, die einen Wagen (9) umfasst, der relativ zu dem Gehäuse (3) vertikal verschiebbar ist, wobei der Ausgabekopf (5) an dem Wagen (9) montiert ist.

4. Getränkeausgabemaschine (2) nach Anspruch 3, wobei das Anschlussorgan (15) mit dem Wagen (9) in Bewegung verbunden ist.

5. Getränkeausgabemaschine (2) nach Anspruch 3 oder 4, wobei das Anschlussorgan (15) und der Wagen (9) einstückig ausgebildet sind.

6. Getränkeausgabemaschine (2) nach einem der Ansprüche 3 bis 5, die zwei Führungsstangen (7) umfasst, die an dem Gehäuse (3) befestigt sind, wobei der Wagen (9) entlang einer Gleitrichtung, die im Wesentlichen vertikal ist, wenn die Getränkeausgabemaschine (2) auf einer horizontalen Fläche steht, an den Führungsstangen (7) gleitend montiert ist.

7. Getränkeausgabemaschine (2) nach einem der Ansprüche 1 bis 6, wobei das Gehäuse (3) eine Vorderfront (17) mit einem Durchgangsschlitz (18) aufweist, der dazu eingerichtet ist, sich im Wesentlichen vertikal zu erstrecken, wenn die Getränkeausgabemaschine (2) auf einer horizontalen Fläche steht, wobei das Anschlussorgan (15) und/oder das Anschlussteil (23) dazu eingerichtet ist/sind, sich durch den Durchgangsschlitz (18) zu erstrecken und in dem Durchgangsschlitz (18) bewegt zu werden, wenn die Milchaussschäumvorrichtung (22) vertikal zwischen der abgesenkten Position und der angehobenen Position verschoben wird.

8. Getränkeausgabemaschine (2) nach einem der Ansprüche 1 bis 7, wobei das Anschlussorgan (15) eine Anschlussdüse (19) aufweist, die dazu eingerichtet ist, fluidisch mit dem Kessel (6) verbunden zu werden und an der das Anschlussteil (23) fluidisch anschließbar ausgebildet ist, und ein Verriegelungsteil (21), das sich um die Anschlussdüse (19) herum erstreckt und dazu eingerichtet ist, das Anschlussteil (23) an dem Anschlussorgan (15) zu verriegeln.

9. Getränkeausgabemaschine (2) nach Anspruch 8, die eine Drehsicherungseinrichtung umfasst, die dazu eingerichtet ist, das Anschlussteil (23) drehfest relativ zu dem Anschlussorgan (15) zu halten und eine Drehung des Anschlussteils (23) um eine Drehachse zu verhindern, die mit einer zentralen Längsachse der Anschlussdüse (19) zusammenfällt.

10. Getränkeausgabemaschine (2) nach einem der Ansprüche 1 bis 9, wobei die Milchaussschäumvorrichtung (22) einen Milchschaumauslasskanal (42) aufweist, der dazu eingerichtet ist, sich vertikal über einem Behältnis zu befinden.

11. Getränkeausgabemaschine (2) nach einem der Ansprüche 1 bis 10, wobei die Milchaussschäumvorrichtung (22) eine Mischkammer (34), eine Heißwasser-/Dampfzuführleitung (38), die fluidisch mit dem Anschlussteil (23) verbunden ist, eine Hauptströmungsleitung (36), die die Heißwasser-/Dampfzuführleitung (38) mit der Mischkammer (34) verbindet, eine Milchzuführleitung (39), die mit der Hauptströmungsleitung (36) verbunden ist, und eine Luftzuführleitung (41), die mit der Hauptströmungsleitung (36) verbunden ist, aufweist.

12. Getränkeausgabemaschine (2) nach Anspruch 11, wobei die Milchaussschäumvorrichtung (22) aufweist:
• einen Mischteil (32) mit der Mischkammer (34), der Heißwasser-/Dampfzuführleitung (38) und der Hauptströmungsleitung (36), und
• einen Verschlussteil (43), der relativ zu dem Mischteil (32) zwischen einer Schließstellung, in der der Verschlussteil (43) die Mischkammer (34) und die Hauptströmungsleitung (36) verschließt, und einer Öffnungsstellung beweglich ist, in der die Mischkammer (34) und die Hauptströmungsleitung (36) geöffnet und zum Reinigen zugänglich sind.

13. Getränkeausgabemaschine (2) nach Anspruch 11 oder 12, wobei die Hauptströmungsleitung (36) eine Querschnittsverengung (37) aufweist, die ein auf dem Venturi-Effekt basierendes Milch- und Luftansaugsystem bildet.

## Claims

1. Beverage dispensing machine (2) comprising:
• a frame (3),
• a boiler (6) arranged in the frame (3) and configured to produce hot water and/or steam,
• a dispensing head (5) which is height-adjustable and is vertically displaceable relative to the frame (3) between a lower position and an upper position,
• a connecting member (15) which is configured to be fluidly connected to the boiler (6) and to be supplied with hot water and/or steam originating from the boiler (6), and
• a milk frothing device (22) comprising a milk reservoir (29) defining an internal volume intended to contain milk, and a connecting part (23) configured to be mechanically and fluidly connected to the connecting member (15) and to supply the milk frothing device (22) with hot water and/or steam, **characterized in that** the connecting member (15) is vertically displaceable relative to the frame (3) and **in that** the milk frothing device (22) is height-adjustable and is vertically displaceable relative to the frame (3) between a lowered position and a raised position.

2. Beverage dispensing machine (2) according to claim 1, wherein the connecting member (15) is mechanically connected to the dispensing head (5) such that a displacement of the dispensing head (5) between the upper position and the lower position brings about a displacement of the milk frothing device (22) between the raised position and the lowered position.

3. Beverage dispensing machine (2) according to claim 1 or 2, which comprises a carriage (9) that is vertically displaceable relative to the frame (3), the dispensing head (5) being mounted on the carriage (9).

4. Beverage dispensing machine (2) according to claim 3, wherein the connecting member (15) is fixed in movement with the carriage (9).

5. Beverage dispensing machine (2) according to claim 3 or 4, wherein the connecting member (15) and the carriage (9) are made in one piece.

6. Beverage dispensing machine (2) according to any one of claims 3 to 5, which comprises two guide rods (7) fixed to the frame (3), the carriage (9) being mounted so as to slide on the guide rods (7) along a sliding direction which is substantially vertical when the beverage dispensing machine (2) rests on a horizontal surface.

7. Beverage dispensing machine (2) according to any one of claims 1 to 6, wherein the frame (3) comprises a front face (17) provided with a through slot (18) which is configured to extend substantially vertically when the beverage dispensing machine (2) rests on a horizontal surface, the connecting member (15) and/or the connecting part (23) being configured to extend through the through slot (18) and to be displaced in the through slot (18) when the milk frothing device (22) is displaced vertically between the lowered position and the raised position.

8. Beverage dispensing machine (2) according to any one of claims 1 to 7, wherein the connecting member (15) comprises a connection nozzle (19) which is configured to be fluidly connected to the boiler (6) and to which the connecting part (23) is configured to be fluidly connected, and a locking part (21) which extends around the connection nozzle (19) and which is configured to lock the connecting part (23) on the connecting member (15).

9. Beverage dispensing machine (2) according to claim 8, which comprises a rotation-blocking device configured to block the connecting part (23) in rotation relative to the connecting member (15) and to prevent a rotation of the connecting part (23) about a rotation axis coinciding with a central longitudinal axis of the connection nozzle (19).

10. Beverage dispensing machine (2) according to any one of claims 1 to 9, wherein the milk frothing device (22) comprises a milk foam discharge duct (42) configured to be located vertically above a receptacle.

11. Beverage dispensing machine (2) according to any one of claims 1 to 10, wherein the milk frothing device (22) comprises a mixing chamber (34), a hot water/steam supply duct (38) fluidly connected to the connecting part (23), a main flow duct (36) connecting the hot water/steam supply duct (38) to the mixing chamber (34), a milk supply duct (39) connected to the main flow duct (36), and an air supply duct (41) connected to the main flow duct (36).

12. Beverage dispensing machine (2) according to claim 11, wherein the milk frothing device (22) comprises:
• a mixing part (32) comprising the mixing chamber (34), the hot water/steam supply duct (38) and the main flow duct (36), and
• a closure part (43) movable relative to the mixing part (32) between a closing position in which the closure part (43) closes the mixing chamber (34) and the main flow duct (36) and an opening position in which the mixing chamber (34) and the main flow duct (36) are open and accessible for cleaning.

13. Beverage dispensing machine (2) according to claim 11 or 12, wherein the main flow duct (36) comprises a cross-sectional restriction (37) forming a milk and air suction system based on the venturi effect.
